# EUROPÄISCHE PATENTANMELDUNG

(11) **EP 1 179 942 A1**
(43) Veröffentlichungstag der Anmeldung: **13.02.2002**
(21) Anmeldenummer: 00117011.7
(22) Anmeldetag: 08.08.2000
(51) Int. Cl.: H04L 29/12

(54) **Verfahren und Vorrichtung zur Verwaltung einer Vielzahl von Endgeräten**

(71) Anmelder: SIEMENS AKTIENGESELLSCHAFT, 80333 München (DE)
(72) Erfinder: Böhmer, Bernhard, Dr., 14055 Berlin (DE); Kastelewicz, Georg, 10179 Berlin (DE); Kim, Peter, Dr., 12623 Berlin (DE); Vogel, Arnim, 10437 Berlin (DE)

(57) **Zusammenfassung**

Es wird eine zentrale Instanz zur Verwaltung aller Endgeräte eines Nutzers eingeführt. Bei dieser Instanz melden sich alle Endgeräte des jeweiligen Nutzers an und hinterlassen Informationen, auf welche Weise Applikationen mit ihnen in Wechselwirkung treten können, und welche Methoden des Informationsaustausches sie unterstützen (Protokolle, Datenaustauschformate, Adressinformationen).
Applikationen, die mit Endgeräten in Interaktion treten, fragen bei der zentralen Instanz an, über welche Endgeräte ein bestimmter Nutzer erreicht werden kann. Im Ergebnis der Anfrage erhält die Applikation (Wenn sie diese Information erhalten darf) eine Liste der Endgeräte des Nutzers. Diese Liste enthält für jedes Endgerät Adressinformationen und Informationen über mögliche Datenaustauschformate und Protokolle, die vom Endgerät unterstützt werden.

## Beschreibung

### Fachgebiet der Erfindung

In den letzten Jahren ist das Interesse kommerzieller Informationsanbieter, üblicherweise auch Service Provider genannt, an Datennetzen wie dem Internet sprunghaft gestiegen. Diese Entwicklung ist vor allem in der Flexibilität des Informationsaustausches und den vergleichbar geringen Kosten begründet. So ist es zum Beispiel im Internet sehr einfach möglich, ohne Zwischenschaltung einer zentralen Instanz schnell und billig Informationen weltweit verfügbar zu machen, oder auch völlig neue Dienste anzubieten. Dies basiert auf der verteilten Kommunikationsarchitektur des Internets. Einheitliche Richtlinien sind hierbei schwer durchzusetzen.

Mit der Verschmelzung von Daten- und Telefonnetzen drängen plötzlich eine Vielzahl neuer Endgeräte auf den Telekommunikations-Markt. Beispiele hierfür sind die bereits eingeführten WAP (Wireless Access Protocol) Endgeräte. Durch die stetig erhöhte Nachfrage nach größeren Bandbreiten werden auch immer mehr Dienste möglich, beispielsweise auch zunehmend im Multimedia-Bereich.
Nutzer treten mit den von ihnen abonnierten Diensten nun nicht mehr nur mittels eines einzigen, definierten Endgerätes in Kontakt, sondern nutzen die ganze Vielfalt neuer Endgeräte und die damit verbundenen vielfältigen Access-Technologien. Hinzu kommt, daß ein Nutzer einen Dienst über verschiedene Endgeräte gleichzeitig wahrnehmen kann.
Hieraus ergibt sich eine völlig neue Klasse von Applikationen, die darauf ausgerichtet ist, daß Nutzer sie von unterschiedlichen Typen von Endgeräten aus ansteuern, und die ihre Dienstleistungen auf jedem Endgerät des Nutzers erbringen sollen.

Diese Applikationen stellen neue Anforderungen an die Netzinfrastruktur: eine Anwendung muß immer informiert sein, an welcher Art von Endgeräten sie einem Nutzer ihre Dienstleistungen erbringen und wie sie mit diesen Endgeräten in Kontakt treten kann.

### Stand der Technik

Dieses Problem ist neu, denn die Applikation musste bislang in der Regel nur mit einem einzigen Endgerät dieses Nutzers zusammenarbeiten können. Die Applikation hatte das Wissen, wie sie mit dem Endgerät in Wechselwirkung treten konnte. Gelang dies der Applikation nicht, gab es keinen Weg, die Dienstleistung zu erbringen.

Aufgabe der Erfindung ist es also, zu ermöglichen, daß ein Nutzer eine Vielzahl, auch vom Typ her unterschiedlicher, Endgeräte haben kann und jedes mit der Applikation im Rahmen seiner Möglichkeiten zusammenarbeiten soll.

### Darstellung der Erfindung

Diese Aufgabe wird gelöst durch ein Verfahren gemäß Patentanspruch 1 und eine Vorrichtung gemäß Patentanspruch 9.

Zur Lösung dieses Problems wird eine zentrale Instanz zur Verwaltung aller Endgeräte eines Nutzers eingeführt. Bei dieser Instanz melden sich alle Endgeräte des jeweiligen Nutzers an und hinterlassen Informationen, auf welche Weise Applikationen mit ihnen in Wechselwirkung treten können, und welche Methoden des Informationsaustausches sie unterstützen (Protokolle, Datenaustauschformate, Adressinformationen). Applikationen, die mit Endgeräten in Interaktion treten, fragen bei der zentralen Instanz an, über welche Endgeräte ein bestimmter Nutzer erreicht werden kann. Im Ergebnis der Anfrage erhält die Applikation (Wenn sie diese Information erhalten darf) eine Liste der Endgeräte des Nutzers. Diese Liste enthält für jedes Endgerät Adressinformationen und Informationen über mögliche Datenaustauschformate und Protokolle, die vom Endgerät unterstützt werden.

Der erfinderische Schritt liegt darin, daß mit der Nutzung einer Vielzahl von Endgeräten und Applikationen durch einen Nutzer bestimmte Eigenschaften (Beschreibungen) dieser Endgeräte von einer zentralen Instanz verwaltet werden. Dabei registrieren Endgeräte bei der zentralen Instanz ihre Adressinformationen sowie Informationen über mögliche Datenaustauschformate und Protokolle, und halten diese Registrierungsinformationen aktuell.
Applikationen, die in Kontakt mit einem Nutzer treten wollen, informieren sich bei der zentralen Instanz über die registrierten Endgeräte dieses Nutzers.

Vorteilhafte Ausgestaltungen und Weiterbildungen sind in den Unteransprüchen angegeben.

Stellvertretend für die Endgeräte können auch andere Netzelemente die Anmeldung übernehmen.

Registrierte Informationen können sich auch dynamisch ändern, wenn man mobile Endgeräte betrachtet, deren Position in einem Netz (Adresse) über die Zeit variieren kann, und bei denen sich auch die Accesstechnologie bei Roaming in andere Netzsegmente verändern kann. Endgeräte müssen also ihre Registrierungsinformation aktuell halten.

Die Applikationen können aufgrund der von der zentralen Instanz zurückgemeldeten Informationen entscheiden, ob und welchen Weg sie wählt, um mit dem fraglichen Nutzer in Kontakt zu treten. Sie sucht nach einem geeigneten Algorithmus die infrage kommenden Endgeräte aus und spricht sie an. Der Algorithmus kann dabei auch Einstellungen des Nutzers berücksichtigen. Diese Einstellungen werden gleichfalls von der zentralen Instanz verwaltet und an die Applikationen geliefert.

Vorteile einer zentralen Endgeräteverwaltung:
Im Falle des Fehlens einer zentralen Endgeräteverwaltung müßten sich Endgeräte immer bei allen infrage kommenden Applikationen registrieren. Das ist sehr aufwändig, da die Anzahl der Applikationen, die ein Nutzer abonniert hat, sehr groß sein kann. Diese Registriermechanismen müßten auf jedem Endgerät des Nutzers eingerichtet werden. Darüber hinaus müßte auch jeder Applikationsanbieter Mechanismen zur Registrierung implementieren, die für jeden Endgerätetyp verschieden sein können.
Im Falle einer zentralen Verwaltung implementiert nur die zentrale Instanz die Anmeldeschnittstellen. Endgeräte registrieren sich genau bei dieser ihnen bekannten zentralen Instanz. Gleichzeitig müssen Applikationen nur die Schnittstelle zur zentralen Instanz unterstützen, die leicht auch standardisiert werden kann.
Darüber hinaus können (z. B. nach Kostengesichtspunkten) bei der zentralen Verwaltung auch Präferenzen betreffend die Endgeräte, mit denen die Applikation kommunizieren soll, eingestellt werden (z. B. Auswahl oder Rangfolge der Endgeräte, bevorzugte Datenformate und Übertragungsstandards).

### Kurzbeschreibung der Zeichnungen

Im folgenden wird die Erfindung anhand von Ausführungsbeispielen erläutert. Dabei zeigen
- Figur 1: die Systemarchitektur zur zentralen Verwaltung von Endgeräten,
- Figur 2: beispielhaft einen Nachrichtenfluß und
- Figur 3: ein Ausführungsbeispiel für einen Nutzer, der zwei Endgeräte benutzt und zwei Dienste subskribiert hat.

### Beschreibung der bevorzugten Ausgestaltungsformen

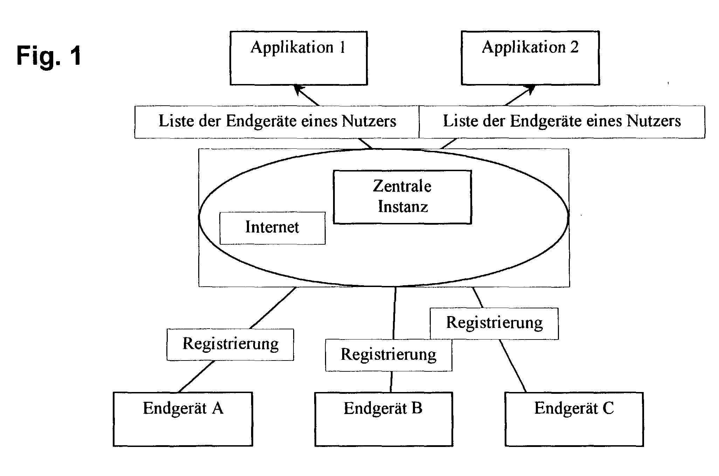

Figur 1 beschreibt die Systemarchitektur zur zentralen Verwaltung von Endgeräten. Es zeigt die zentrale Instanz, die sich in einem beliebigen Netz befinden kann, beispielsweise dem Internet. Endgeräte A, B, C können sich bei der Instanz durch einen Registrierungsvorgang bekannt machen, bzw. auch deregistrieren. Die Applikationen 1, 2 können für die Anwendung benötigte Informationen über die registrierten Endgeräte bei der zentralen Instanz abfragen und erhalten dann je nach Art der Applikation beispielsweise eine Liste der registrierten Endgeräte eines Benutzers zurück.

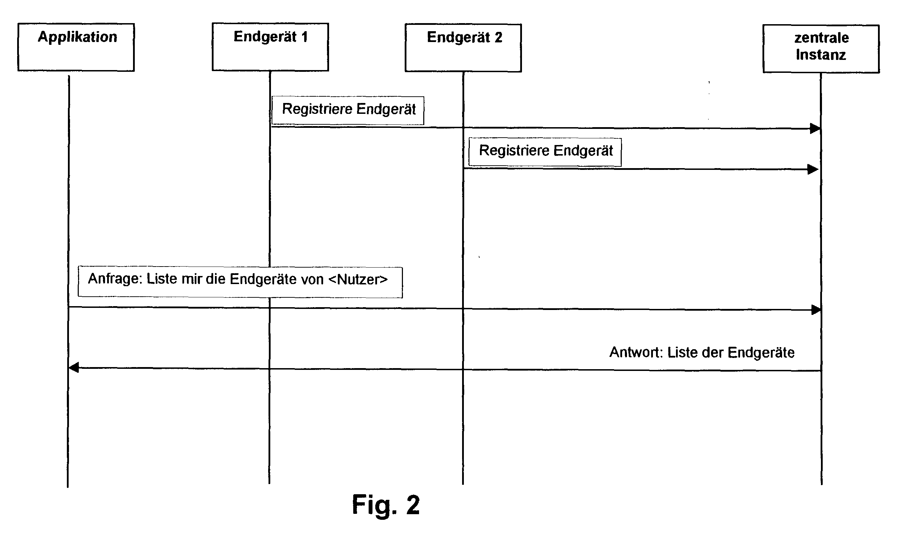

Figur 2 zeigt einen beispielhaften Nachrichtenfluß zwischen der zentralen Instanz und den Endgeräten einerseits, sowie den Applikationen (beispielsweise Diensten) andererseits. Die Endgeräte registrieren sich dabei in geeigneter Weise bei einer zentralen Verwaltungs-Instanz,beispielsweise mit der Art des Endgerätes, der Art der mit diesem Endgerät möglichen Kommunikation und weitere Angaben. Die Registrierung kann dabei von dem Endgerät aus selber oder auch durch eine dritte Instanz erfolgen.
Sobald eine Applikation (beispielsweise ein Dienst) eine Information über Endgeräte benötigt, kann sie diese von der zentralen Instanz abfragen.

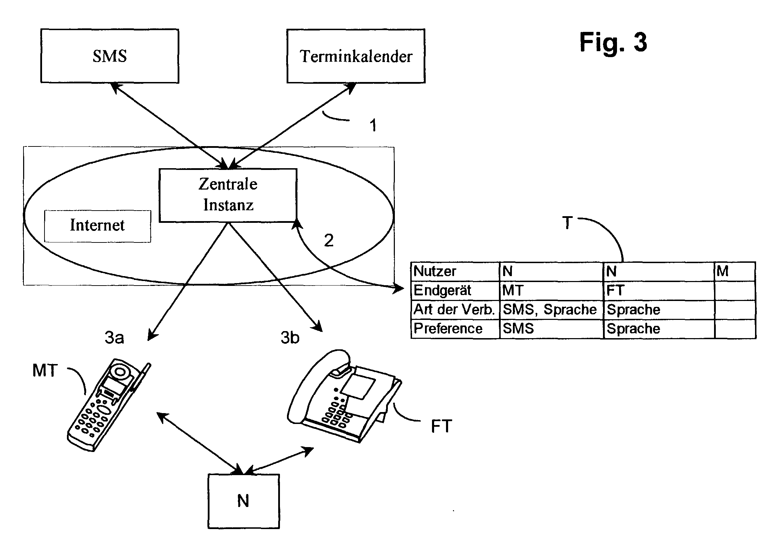

Figur 3 stellt einen beispielhaften Anwendungsfall dar. Ein Nutzer N besitzt ein Mobiltelefon (Endgerät A aus Figur 1), welches den Short-Message-Service SMS (Applikation 1) unterstützt, und einen normales Festnetztelefon (Endgerät B). Des weiteren benutzt er eine Kalenderapplikation Terminkalender (Applikation 2), in der er mindestens einen Termin eingetragen hat.
Der Nutzer (bzw. dessen Endgeräte Mobiltelefon, Festnetztelefon) sind aktiv und haben sich bei der erfindungsgemäßen zentralen Instanz im Netz, Internet registriert. Dies ist beispielsweise in einer Tabelle T abgespeichert, andere Lösungen wie Datenbanken sind dem Fachmann bekannt.
Die Kalenderapplikation überwacht Termine und Vorwarnzeiten und informiert den Nutzer N, wenn der fragliche Termin herangerückt ist. Hierzu muß die Applikation mit dem Nutzer in Kontakt treten.
Sie wendet sich deshalb an die besagte zentrale Instanz, 1, und erhält eine Liste der Endgeräte, an denen sie den Nutzer erreichen kann, 2. Die Applikation stellt aus der Liste der Endgeräte fest, daß zwei Endgeräte registriert sind. Eines ist ein Mobiltelefon, welches über den SMS oder eine Sprachverbindung angesteuert werden kann, das andere ein Festnetztelefon, für das nur eine Sprachverbindung infrage kommt. Zusätzlich hat der Nutzer eingestellt, daß er am mobilen Endgerät den Short-Message-Service gegenüber einer Sprachnachricht bevorzugt.
Die Applikation ist in dem Beispiel so konfiguriert, daß sie den Nutzer auf allen verfügbaren Wegen benachrichtigt. Sie sendet also die Termininformation als Short-Message an die Adresse des mobilen Endgerätes, 3a, und baut parallel dazu eine Telefonverbindung zum Festnetztelefon des Nutzers auf, 3b, um ihm die Termininformation zuzusprechen. Damit hat die Applikation alle ihr zu Gebote stehenden Mittel ausgeschöpft, um den Nutzer über den Termin zu informieren.

## Patentansprüche

1. Verfahren zur Verwaltung von Endgeräten in Kommunikationsnetzen, bei dem
- mindestens ein Endgerät (Endgerät A, B, C) bei einer zentralen Registrierungsinstanz (zentrale Instanz) registriert ist (Registrierung), und
- mindestens eine Applikation (Applikation 1, 2) mit diesem mindestens einen Endgerät in Verbindung treten will (1), und
- die Applikation zu diesem Zweck eine Anfrage (Anfrage) bei der zentralen Registrierungsinstanz (zentrale Instanz) durchführt (2), und
- die Applikation dann aufgrund des Ergebnisses der Abfrage (Liste der Endgeräte eines Nutzers, T) mindestens eine Aktion durchführt (3a, 3b).

2. Verfahren nach Patentanspruch 1,
**dadurch gekennzeichnet, dass**
die Registrierung des Endgerätes bei der zentralen Registrierungsinstanz (zentrale Instanz) nicht durch das zu registrierende Endgerät (Endgerät A, B, C) geschieht.

3. Verfahren nach einem der vorigen Patentansprüche,
**dadurch gekennzeichnet, dass**
die Registrierungs-Informationen aktualisiert werden.

4. Verfahren nach einem der vorigen Patentansprüche,
**dadurch gekennzeichnet, dass**
- die Anfrage (Anfrage: Liste mir die Endgeräte von <Nutzer>) nach dem Nutzer (N) der Endgeräte (MT, FT) von der Applikation durchgeführt wird und
- eine Liste (T) von einem dem Nutzer zugeordneten Endgeräten an die Applikation zurückgeliefert wird.

5. Verfahren nach einem der vorigen Patentansprüche,
**dadurch gekennzeichnet, dass**
eine Abfrage nur zugelassen wird, die Applikation auch eine Berechtigung zu dieser Abfrage hat.

6. Verfahren nach einem der vorigen Patentansprüche,
**dadurch gekennzeichnet, dass**
in der Registrierungs-Information Präferenzen (Preference) zu den Endgeräten angegeben sind, welche betreffen können:
- eine Rangfolge, in der einzelne Endgeräte anzusprechen sind
- Datenformate, die zur Übertragung von Sprache und/oder Daten zu dem entsprechenden Endgerät verwendet werden können,
- Übertragungs-Standards (Art der Verbindung), die zur Übertragung zu verwenden sind.

7. Verfahren nach einem der vorigen Patentansprüche,
**dadurch gekennzeichnet, dass**
die Applikation anhand der zurückgelieferten Registrierungsinformation entscheidet, welches Endgerät zur Kontaktaufnahme verwendet werden soll.

8. Verfahren nach einem der vorigen Patentansprüche,
**dadurch gekennzeichnet, dass**
die Applikation mit mehreren Endgeräten Kontakt aufnimmt.

9. Vorrichtung zur Durchführung des Verfahrens zur Verwaltung einer Vielzahl von Endgeräten nach einem der Patentansprüche 1 bis 9.
